# EUROPEAN PATENT APPLICATION

(11) **EP 4 575 236 A1**
(43) Date of publication of application: **25.06.2025**
(21) Application number: 23868088.8
(22) Date of filing: 11.09.2023
(51) Int. Cl.: F15B 15/14, G01B 13/00, G01B 13/08

(54) **RETRACTION MECHANISM AND DIMENSION-MEASURING DEVICE PROVIDED WITH SAME**

(30) Priority: 21.09.2022 JP 2022149907
(71) Applicant: Tokyo Seimitsu Co., Ltd., Hachioji-shi, Tokyo 192-8515 (JP)
(72) Inventor: SUZUKI Shinya, Tsuchiura-shi, Ibaraki 300-0015 (JP)
(74) Representative: Seemann & Partner Patentanwälte mbB
(86) International application number: PCT/JP2023/033070
(87) International publication number: WO 2024/062965

(57) **Abstract**

A pneumatic cylinder type retraction mechanism includes a cylinder and a piston movable back and forth inside the cylinder, and causes the piston to move back and forth using an air pressure. In this retraction mechanism, sealing means is provided as stationary sealing means on an inner periphery of the cylinder facing an outer periphery of the piston. The sealing means suppresses leakage of pressurized air for actuating the piston from within the cylinder. The retraction mechanism having this characteristic is capable of achieving at least one of effects including reduction in starting resistance, improvement of measurement accuracy of a measuring device or shortening of measurement time.

## Description

### TECHNICAL FIELD

The present disclosure relates to a retraction mechanism that brings a probe into abutting contact with a workpiece at the time of measurement and causes the probe to withdraw from the workpiece at the time of non-measurement, and a dimension measuring device including the retraction mechanism. In particular, the present disclosure relates to a retraction mechanism preferable in a case of using a pneumatic cylinder for the abutting contact and withdrawal of the probe, and a dimension measuring device including the retraction mechanism.

### BACKGROUND ART

A dimension measuring device with an air cylinder is frequently used for electrically measuring an outer diameter, etc. of a shaft member and checking the dimension thereof. As an example, use of a gauging head or a measuring head for checking the linear dimension of a mechanical piece is shown in Patent Document 1 and

### Patent Document 2.

According to the disclosure of Patent Document 1, a head includes: a casing; a movable arm supporting a feeler; a fulcrum coupled to the casing and the arm and used for making the arm movable with respect to the casing; and an attraction device (retraction mechanism) including a cylinder coupled to the casing and a piston to slide in the cylinder. This piston biases the arm to a definite inoperative position. The head further includes a position transducer for providing a signal depending on the position of the arm with respect to the casing. The attraction device includes a bellows gasket housed in the cylinder and having its ends fixed to the cylinder and the piston.

According to Patent Document 2, in order to guarantee high standards of repeatability and accuracy, a measuring head includes: a support structure including a recess, and a casing that defines a longitudinal geometric axis; an arm-set including an arm and a feeler and movable with respect to the support structure; a fulcrum located between the arm and the support structure and used for enabling displacements of the arm with respect to the support structure about a transversal axis; a thrust device located between the arm and the support structure and used for biasing the feeler toward a surface of a mechanical piece to be checked; and a transducer coupled to the arm and the support structure and used for providing a signal depending on the position of the arm with respect to the support structure.

According to Patent Document 3, in order to retract an arm of a measuring head with a simple structure, the measuring head includes a shape-memory alloy actuator as a retraction mechanism. The shape-memory alloy actuator includes a coil spring, a bias spring, etc. made of a shape-memory alloy. The coil spring and the bias spring are passed through a rod from opposite ends of the rod toward a flange fixed at an intermediate part of the rod, and then held in a holder with the bias spring in a compressed state. When the coil spring is energized to heat the coil spring to a temperature equal to or higher than a transformation temperature, the coil spring is deformed to depress a depression plate with the rod, thereby retracting a contact.

Patent Document 4 disclosures a configuration for preventing the occurrence of dew condensation in a pneumatic cylinder. Specifically, the pneumatic cylinder includes a cylinder, a piston that partitions the interior of the cylinder into a first chamber and a second chamber, and sealing means located on a piston wall and used for sealing an interface between the piston and the cylinder.

### PRIOR ART DOCUMENTS

### PATENT DOCUMENTS

Patent Document 1: Japanese Patent Application Publication (Translation of PCT Application) No. 2010-502971
Patent Document 2: Japanese Patent Application Publication No. 2011-64694
Patent Document 3: Japanese Patent Application Publication No. 2001-27503
Patent Document 4: Japanese Patent Application Publication No. 2020-112212

### SUMMARY OF THE INVENTION

### PROBLEM TO BE SOLVED BY THE INVENTION

In a measuring device including a pneumatic cylinder type retraction mechanism, an arm mounted with a probe is caused to swing by the spring force (restoring force) of an internal spring to bring the probe into abutting contact with a workpiece as a measurement target, and the displacement of the probe is measured by measuring means that is a differential transformer, for example, provided on the opposite side to the probe. After the measurement, the pneumatic cylinder supplies force for overcoming the spring force of the internal spring to cause the arm to pivot in a reverse direction, thereby moving the probe away from the workpiece, namely, retracting the probe. If there are a plurality of measurement targets, this motion is repeated at intervals.

In the pneumatic cylinder type measuring device, the internal spring and the pneumatic cylinder are used in many cases as described above for controlling the swinging motion of the arm. In the case of a single-acting cylinder type pneumatic cylinder including only one cylinder for the purpose of size reduction, the internal spring is wound around a piston rod and pressurized air is guided into a space formed between the piston and the cylinder. In order for the piston to be pressed effectively by the pressurized air, in other words, in order to prevent leakage of the pressurized air from the space formed by the piston and the cylinder, a piston ring type packing is provided between the piston and the cylinder.

The gauging head or the measuring head for checking a length shown in Patent Document 1 also includes a U-packing housed in a recess of the piston head to prevent leakage of pressurized air from a space formed between the piston and the cylinder. The present inventor has found that, in the measuring device with such a single-acting cylinder, using the measuring device at time intervals occasionally causes a phenomenon of deteriorating starting characteristics of the piston. One of reasons for this may be that the packing attached to the piston and to make sliding contact with the cylinder adheres a counterpart material (cylinder) at a sliding contact part. Specifically, the reason may be that the packing is fitted to and affixed (stuck) to the counterpart material over time. For higher performance of the measuring device, influence caused by the affixation of the packing is desired to be minimized.

According to Patent Document 2, instead of a pneumatic cylinder, a bellows is used for causing the arm to pivot. Pressurized air is introduced into the bellows to expand the bellows. Then, the bellows comes into abutting contact with the arm to cause the arm to pivot. During pivotal motion of the arm in a reverse direction, a pressure in the bellows is reduced and the arm is pulled back by a spring provided separately. This is similar to Patent Document 1 in terms of using an air pressure and a spring. Meanwhile, as the bellows is formed into a bag-like shape, a sealing material such as a seal ring is unnecessary. Thus, a problem relating to sliding motion such as affixation of a packing does not occur. However, a problem still arises in terms of expensiveness of the bellows and time-consuming change of the bellows in case of its breakage.

Patent Document 3 discloses use of the spring made of a shape-memory alloy for biasing the arm instead of a pneumatic cylinder or a bellows for causing the arm to pivot. In this case, the spring is compressed at a certain temperature or less and the spring is expanded at the certain temperature or more, or is compressed and expanded reversely. While the expansion and compression of the spring can be switched simply by heating the spring using a piezoelectric element, for example, it is considerably difficult to achieve stable two-way memory effect by the shape-memory alloy spring alone. Thus, it inevitably becomes necessary to employ a method of converting one-way memory effect to two-way motion using biasing force, so that spring force twice the biasing force to be used is required to be retained. This leaves room for improvement in terms of size reduction.

Patent Document 4 is intended to solve the problem of dew condensation occurring when pressurized air is exhausted from the space formed between the cylinder and the piston. Specifically, like the conventional pneumatic cylinder shown in Patent Document 1, the disclosure of Patent Document 4 leaves room for improvement in terms of solving the problem that a starting resistance of the sealing member of the pneumatic cylinder is increased after a long period of non-use.

A pneumatic cylinder type retraction mechanism having a single-acting cylinder provided at a measuring device has problems with a starting resistance of the retraction mechanism, and measurement accuracy and measurement time of the measuring device. The present disclosure is to solve at least one of these problems.

### SOLUTION TO PROBLEM

One embodiment of a retraction mechanism of the present disclosure is a pneumatic cylinder type retraction mechanism comprising a cylinder and a piston movable back and forth inside the cylinder. The retraction mechanism causes the piston to move back and forth using an air pressure. In this retraction mechanism, sealing means is provided as stationary sealing means on an inner periphery of the cylinder facing an outer periphery of the piston. The sealing means suppresses leakage of pressurized air for actuating the piston from within the cylinder.

### EFFECTS OF THE INVENTION

The present disclosure is capable of achieving at least one of effects including reduction in starting resistance of the retraction mechanism, improvement of measurement accuracy of a measuring device including the retraction mechanism, shortening of measurement time of the measuring device including the retraction mechanism, or reduction in the size of the measuring device.

### BRIEF DESCRIPTION OF DRAWINGS

Fig. 1 is a view showing exemplary use of a dimension measuring device including a retraction mechanism according to an embodiment.
Fig. 2 is a schematic longitudinal sectional view of one example of the dimension measuring device.
Fig. 3A is a longitudinal sectional view of a principal part of the retraction mechanism.
Fig. 3B is a partial sectional view (perspective view) of sealing means.
Fig. 3C is a partial sectional view of the retraction mechanism according to the embodiment where a Y-packing is housed in a circumferential recess formed at a cylinder.
Fig. 3D is a partial sectional view of the retraction mechanism according to the embodiment where the Y-packing is housed in the circumferential recess formed at the cylinder (showing a state where a piston head has moved up).
Fig. 3E is a partial sectional view of a retraction mechanism according to a conventional technique where a Y-packing is housed in a circumferential recess formed at a piston head.
Fig. 3F is a partial sectional view of the retraction mechanism according to the conventional technique where the Y-packing is housed in the circumferential recess formed at the piston head (showing a state where the piston head has moved up).
Fig. 4A is a view showing comparison in sliding resistance between the retraction mechanism of the embodiment and the retraction mechanism having the conventional configuration. Circular markers show experimental result about the retraction mechanism of the embodiment, and triangular markers show experimental result about the retraction mechanism having the conventional configuration (comparative example).
Fig. 4B is a schematic sectional view of the retraction mechanism having the conventional configuration used in the experiment.
Fig. 5A is a transverse (horizontal) sectional view of the retraction mechanism.
Fig. 5B is a sectional view taken along a line A-A in Fig. 3A and is a vertical sectional view taken at a position displaced from a center line of a piston rod.

### DESCRIPTION OF EMBODIMENTS

According to a first embodiment of a retraction mechanism of the present disclosure, a pneumatic cylinder type retraction mechanism comprises a cylinder and a piston movable back and forth inside the cylinder. The retraction mechanism causes the piston to move back and forth using an air pressure. In this retraction mechanism, sealing means is provided as stationary sealing means on an inner periphery of the cylinder facing an outer periphery of the piston. The sealing means suppresses leakage of pressurized air for actuating the piston from within the cylinder.

The retraction mechanism of the first embodiment includes the stationary sealing means provided on the inner periphery (surface) of the cylinder. Thus, at the time of pushing out the piston by pressurization, the sealing means comes into contact with an outer peripheral surface of the piston to provide sealing with the cylinder. On the other hand, when air is exhausted to pull back the piston, the stationary sealing means is unlikely to hinder movement of the piston. Thus, it is possible to prevent deterioration of starting characteristics. Furthermore, it is possible to make retracting motion smoothly without enlarging an elastic member (such as a spring, for example) belonging to a pneumatic cylinder as the retraction mechanism and without increasing a cylinder diameter. This eliminates the need for increasing the size of the retraction mechanism for the purpose of reinforcing driving force of the retraction mechanism.

According to a second embodiment of a retraction mechanism of the present disclosure, in the retraction mechanism of the first embodiment, the sealing means is a lip packing, the lip packing includes a lip part made of an elastic material, and when the pressurized air is introduced into the cylinder for pushing out the piston, the lip part is pressed against an outer peripheral surface of the piston so as to suppress leakage of the pressurized air in a direction of sliding motion of the piston.

The lip packing is the sealing means to be deformed by receiving an air pressure at the lip part. As the lip part is made of the elastic material, it is actively deformable by following change in a pressurized state and sliding motion of the piston. When pressurized air is introduced, the lip part receives the pressurized air to be deformed, thereby providing sealing with the piston. On the other hand, when the pressurized air is removed (exhausted), the lip part returns to a shape before the pressure receiving. As the lip packing is arranged on the inner peripheral side of the cylinder, the lip part having returned to the original shape does not contact the piston or follows sliding motion of the piston if it touches the piston slightly. Thus, the lip packing is unlikely to hinder sliding motion of the piston. This facilitates further reduction in starting resistance.

According to a third embodiment of a retraction mechanism of the present disclosure, in the retraction mechanism of the second embodiment, the piston includes a piston head slidable along an inner wall of the cylinder, and a piston rod extending downward from a center part of the piston head in a direction in which the piston moves back and forth, and the piston head is in sliding contact with the lip part.

According to the third embodiment, as the piston head is configured to be slidable along the inner wall of the cylinder, it is possible to form spaces over and under the piston head across the piston head. These spaces are available for introducing pressurized air, housing an elastic member, etc., and elements for realizing driving of the retraction mechanism can be located efficiently in these spaces. As a result of these, it is possible to reduce the size of the device further.

According to a fourth embodiment of a retraction mechanism of the present disclosure, the retraction mechanism of the third embodiment further comprises an elastic member, and the piston is pulled back using the restoring force of the elastic member.

The fourth embodiment includes the elastic member for the pulling back. Thus, pressing using pressurized air can be employed for pushing out the piston, and the restoring force (elastic force, biasing force) of the elastic member can be used for pulling back the piston. The elastic member may be arranged in one of the spaces (a space closer to the piston rod, for example) defined by the piston head.

According to the fourth embodiment, when the piston is pushed out using pressurized air, the lip part of the lip packing receives the pressure to be deformed, thereby providing sealing between the cylinder inner wall and the piston head. On the other hand, during the pulling back, the pressurized air is exhausted to pull back the piston using the restoring force of the elastic member. The lip part made of the elastic material returns to the original shape during the pulling back, so that it does not hinder sliding motion of the piston (head). In this way, it is possible to reduce a starting resistance. Generally, the pulling back using the restoring force of the elastic member may have no choice but to depend on weak force. Even in this case, as a frictional resistance occurring in a part of the sliding motion is low, further improvement of the measurement accuracy of a measuring device is facilitated and further shortening of time required for the pulling back is facilitated. As a result, measurement time is shortened further easily.

According to a fifth embodiment of a retraction mechanism of the present disclosure, in the retraction mechanism of the fourth embodiment, the elastic member is a coil spring, the piston head has a space defined between a side wall thereof facing the cylinder inner wall across a gap and the piston rod, and the coil spring wound around the piston rod is held in the space.

According to the fifth embodiment, as the coil spring as the elastic member is housed in the space under the piston head, the space is used efficiently to allow size reduction of the retraction mechanism. As a result, a measuring device including the retraction mechanism can also be reduced in size.

According to a sixth embodiment of a retraction mechanism of the present disclosure, in the retraction mechanism of the fifth embodiment, the lip packing is a Y-packing or a U-packing.

Generally, in many cases, packings such as V packings are superimposed during use. By contrast, many Y-packings or U-packings are designed in such a manner that one of these packings is arranged in one place where the packing is to be used. Thus, the retraction mechanism including such a packing may be further reduced in size.

According to a seventh embodiment of a retraction mechanism of the present disclosure, in the retraction mechanism of the third embodiment, a cylinder base is provided at a lower part of the piston head, and an exhaust channel is provided. The exhaust channel includes a cutout provided at an upper surface of the cylinder base and extending in a transverse direction, and a communication path provided at a case member housing the retraction mechanism and communicably contacting the cutout.

According to a first embodiment of a dimension measuring device of the present disclosure, the dimension measuring device comprises: a probe to come into abutting contact with a workpiece; an arm coupled to the probe on one end side and connected to a measuring head including a differential transformer on the other end side; a holding mount holding the arm in a manner allowing the arm to swing; and swinging means that causes the arm to swing. The swinging means includes a tension spring and the retraction mechanism according to any one of the first to seventh embodiments.

The embodiments of the retraction mechanism will be described below using the drawings.

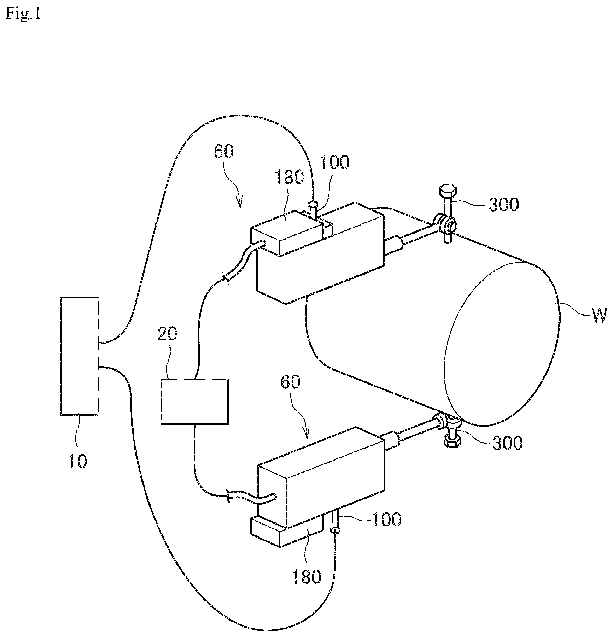

Fig. 1 is a schematic perspective view of an outer diameter measuring device 60 for measuring the outer diameter of a workpiece W. The outer diameter measuring device 60 is provided with a pair of general-purpose measuring heads, and is further provided with a control processor 20 and a compressed air source 10.

The outer diameter measuring device 60 includes a retraction mechanism 100 as a pneumatic cylinder for separating (retracting) a probe 300 from the workpiece W before measurement or after measurement, as will be described later. At the time of measurement, a spring provided at the retraction mechanism 100 brings the probe 300 into abutting contact with the workpiece W, and the control processor 20 processes output from a differential transformer unit.

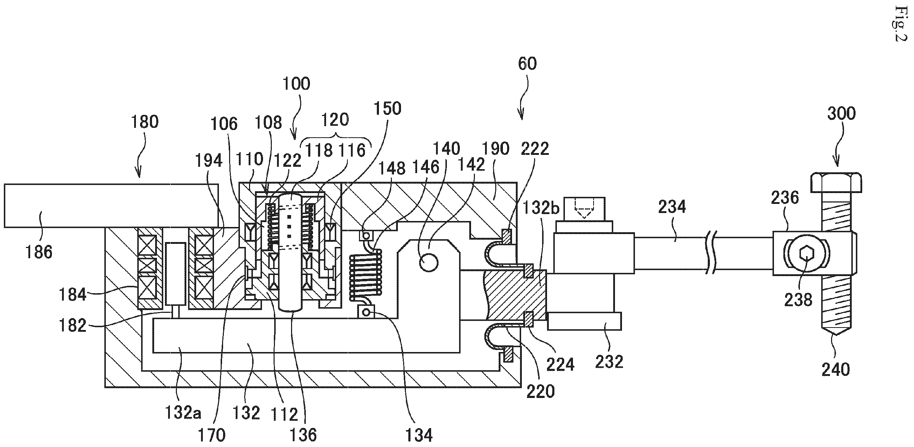

Fig. 2 is a longitudinal sectional view showing the outer diameter measuring device 60 in detail. The outer diameter measuring device 60 includes a case member 190 having a substantially rectangular solid shape, and the retraction mechanism 100 as a pneumatic cylinder and a differential transformer 180 housed in the case member 190. A lever shaft 132 connected to the probe 300 via an arm 234 extends in a transverse direction from the case member 190. A bellows 220 for allowing nutation (precession) motion of the lever shaft 132 is provided between the case member 190 and the lever shaft 132. The bellows 220 has opposite ends where respective latches 222 and 224 are provided. In the case member 190, a swing shaft 140 is arranged at a substantially right angle with respect to the lever shaft 132. The swing shaft 140 fits in a through hole formed at a holding mount 142 that is arranged at an intermediate part of the lever shaft 132 in a longitudinal direction. This allows the lever shaft 132 to swing about the swing shaft 140.

The case member 190 has one side surface having an opening shape, and one end side of the above-described bellows 220 is held in an airtight manner in the opening part by the latch 222. The other end side of the bellows 220 is connected in an airtight manner to an end 132b of the lever shaft 132 by the latch 224. The end 132b of the lever shaft 132 on a mounting side of the bellows 220 is connected in a manner allowing position adjustment thereof to the arm 234 via a coupler 232.

A probe holder 236 for holding the probe 300 is mounted on a tip of the arm 234 on a side opposite to the side connected to the lever shaft 132. Adjusting a retaining screw 238 latched on the probe holder 236 allows a contact part 240 at a tip of the probe 300 to be adjusted in position in a upward-downward direction in Fig 2. In the case of outer diameter measurement such as that shown in Fig. 1, the contact part 240 of this example arranged on a higher side is pressed down, and the contact part 240 of this example arranged on a lower side is pressed up, and measurement is made with the workpiece W interposed therebetween.

While the outer diameter measuring device 60 on the higher side will be described below, the outer diameter measuring device 60 on the lower side has a configuration and performs operation same as those of the outer diameter measuring device 60 on the higher side except a vertically inverted relationship therebetween.

In order to press down the contact part 240, a tension spring 146 is provided in the case member 190 and closer to a counter-probe side 132a of the lever shaft 132 than the holding mount 142. One end side of the tension spring 146 is latched on a support shaft 148 projecting into the case member 190, and the other end side of the tension spring 146 is latched on a latching tool 134 provided at an intermediate part of the lever shaft 132 in the longitudinal direction. This makes the tension spring 146 at this position act to attract the lever shaft 132. As a result, the lever shaft 132 swings about the swing shaft 140 and then presses down the arm 234. In this way, measurement is ready to be made. The differential transformer 180 described below in detail, the tension spring 146, and the swing shaft 140 form swinging means.

In the vicinity of an end of the counter-probe side 132a of the lever shaft 132, a displacement shaft 182 is mounted vertically to the lever shaft 132 and a coil 184 is wound around the displacement shaft 182, thereby forming the differential transformer 180. A signal from the differential transformer 180 is input to a terminal processor 186 and is subjected to signal processing. Then, the signal is guided to the control processor 20 (see Fig. 1).

At the time of finish of measurement or at the time of preparation for measurement, the contact part 240 is moved away from the workpiece W in order to protect both the contact part 240 and the workpiece W. To achieve this, the retraction mechanism 100 as a pneumatic cylinder is provided between the tension spring 146 and the differential transformer 180 in the longitudinal direction of the lever shaft 132.

The retraction mechanism 100 has principal structures including a cylinder 110 having a cap shape, a piston 120 slidable in the cylinder 110 and including a piston head 116 and a piston rod 118, a cylinder base 112 located under the cylinder 110 and in sliding contact with a lower part of the piston rod 118, and a coil spring 122 wound around the piston rod 118 and arranged between the piston head 116 and the cylinder base 112. One end side of the piston rod 118 (upper side) is housed in the cylinder 110, and the other end side (lower side) thereof projects down from the cylinder base 112. An abutment part 136 corresponding to a lower end of the piston rod 118 is capable of forming abutting contact with the lever shaft 132.

When the biasing force of the coil spring 122 is to act at the time of non-use or at the time of measurement, for example, the retraction mechanism 100 stops its operation. Specifically, an air pressure does not act in a space 108 formed between the cylinder 110 and the piston head 116. This puts the space 108 in a substantially atmospheric pressure substantially equal to that in a space 106 of the piston head communicating with an external atmosphere to make the spring force of the coil spring 122 dominant, thereby lifting up the piston rod 118. At this time, the lever shaft 132 in abutting contact with the piston rod 118 is rotated to the right in the drawing about the swing shaft 140 by the tension spring 146, thereby moving down the probe 300 at the tip of the arm 234 coupled to a tip of the lever shaft 132. At the time of measurement, the probe 300 contacts the workpiece W and stops moving down. This state is measured by the differential transformer 180 provided at the end of the lever shaft 132 on the opposite side to the probe 300. At the time of non-measurement, the lever shaft 132 pivots to a position responsive to the spring force of the tension spring 146 and is kept at this position.

On the other hand, at the time of preparation for measurement or immediately after measurement, the piston rod 118 moves down against the biasing force of the coil spring 122 to bring the lower end of the piston rod 118 into abutting contact with the lever shaft 132, thereby depressing the lever shaft 132 down. At this time, the retraction mechanism 100 as a pneumatic cylinder guides pressurized air into the space 108 formed between the cylinder 110 and the piston head 116. As a result, the contact part 240 is moved away from the workpiece W.

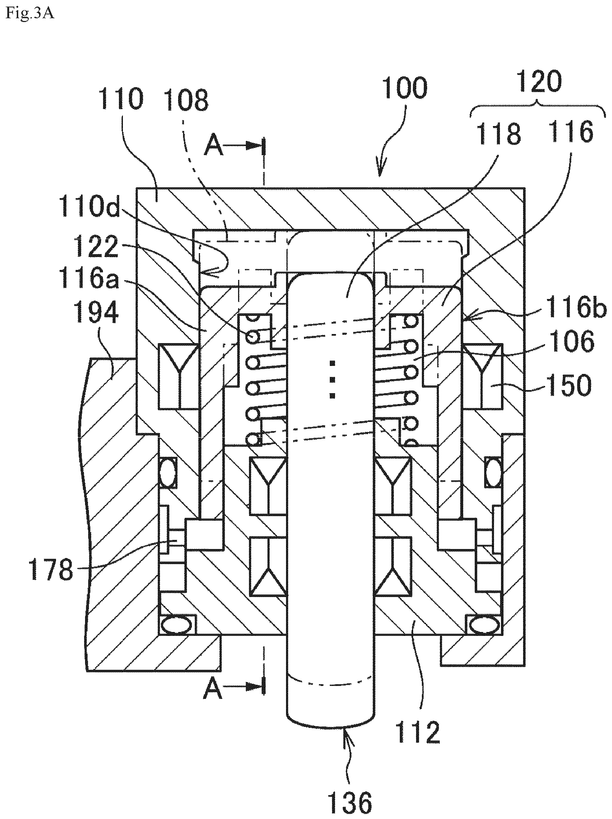

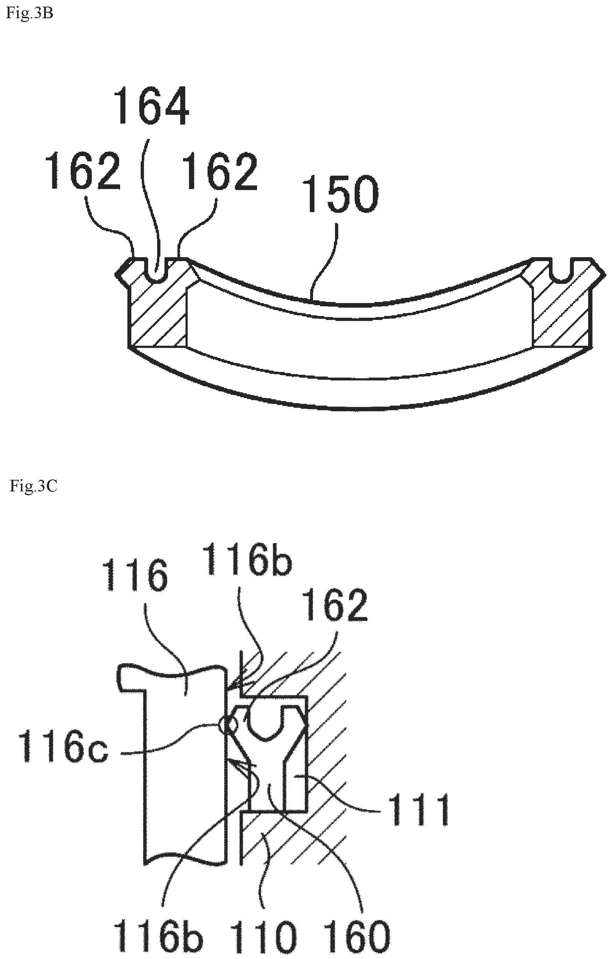

The outline of the outer diameter measuring device 60 using the general uniaxial cylinder 110 has been described above. The following further describes sealing means (stationary sealing means) corresponding to a characteristic structure of the present embodiment in detail using Figs. 3A to 3F. Fig. 3A is a longitudinal sectional view of a principal part of the retraction mechanism 100. Fig. 3B is a perspective view of an extracted part of the sealing means. Figs. 3C to 3F are views each explaining the motion of the sealing means.

The sealing means is also called a lip packing. While a so-called Y packing 150 is used in this example, a U-packing or a V-packing having a similar shape is also available.

The Y-packing 150 is a packing made of an elastic material (vulcanized rubber, thermosetting resin, or thermoplastic resin, for example), and is arranged in a circumferential recess 111 formed at an intermediate part of an inner peripheral surface 110d of the cylinder 110 in the upward-downward direction.

As shown in Fig. 3B, the Y-packing 150 is provided with two lip parts 162 extending upward from a base part 160 in a section of the Y-packing 150 taken in a peripheral direction, and has a Y-shape sectional shape as a whole. The Y-packing 150 forms a pressure-receiving surface using the two lip parts 162 and a recess 164 between the lip parts 162. The Y-packing 150 is arranged with the pressure-receiving surface pointed toward a high-pressure side and the base part 160 pointed toward a low-pressure side. In response to receipt of a pressure on the pressure-receiving surface, the lip parts 162 are stretched out to be pressed against wall surfaces (here, an outer periphery of the piston head 116 and an inner periphery of the cylinder 110), thereby fulfilling a sealing function.

The sealing function fulfilled by the Y-packing 150 will be described in detail. An outer peripheral surface 116a of the piston head 116 is in sliding contact with the lip part 162 of the Y-packing 150. When pressurized air is introduced into the space 108 over the piston head 116, the pressurized air is guided into the recess 164 formed between the lip parts 162. With this pressurized air, an inner diameter (inner periphery) side of the lip part 162 is pressed in a direction of reducing the diameter (inner peripheral direction) to be pressed against the outer peripheral surface of the piston head 116, and an outer diameter (outer periphery) side of the lip part 162 is pressed in a direction of increasing the diameter (outer peripheral direction) to be pressed against the cylinder 110.

By doing so, a gap between the cylinder 110 and the piston head 116 is closed, thereby preventing the pressurized air from leaking from the space 108 toward the cylinder base 112 (see Fig. 3C).

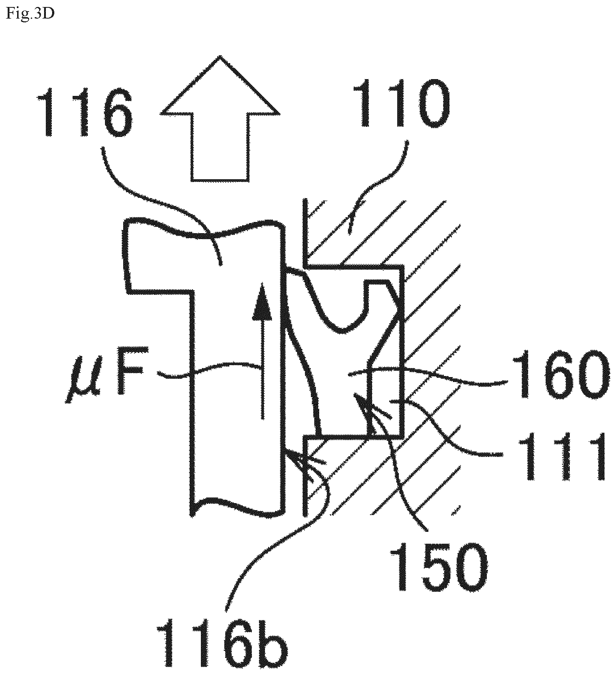

The motion of the retraction mechanism 100 according to the present embodiment having the above-described configuration will be described next using Figs. 3C to 3F. Each of Figs. 3C and 3D is a sectional view of a part of the retraction mechanism 100 according to the present embodiment where the Y-packing 150 is housed in the circumferential recess 111 formed at the cylinder 110.

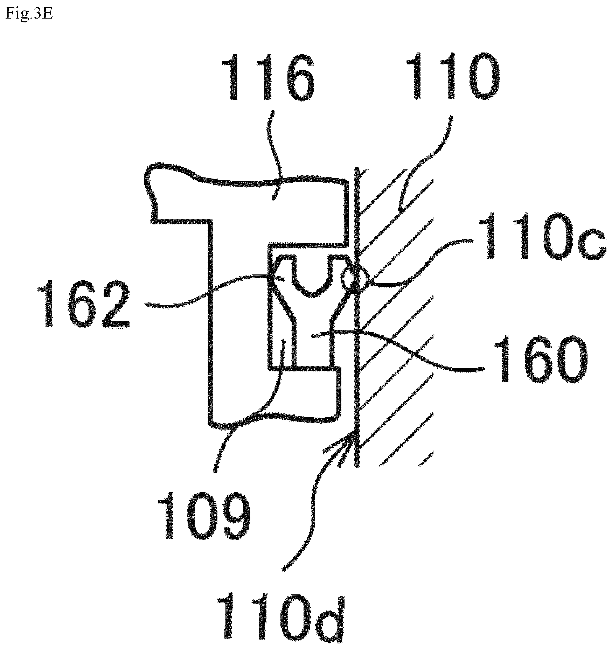

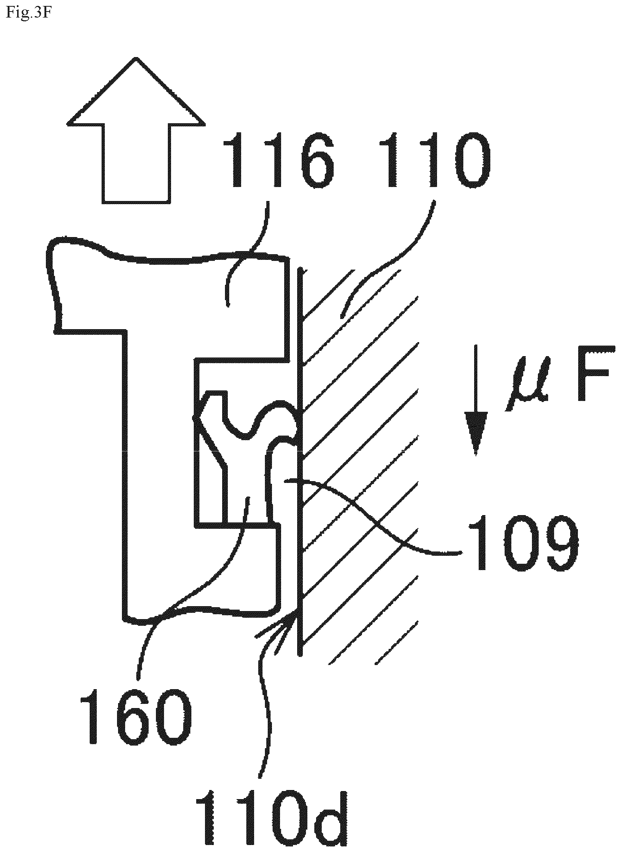

Meanwhile, each of Figs. 3E and 3F is a sectional view of a part of a retraction mechanism according to a conventional technique where the Y-packing 150 is housed in a circumferential recess 109 formed at the piston head 116.

A state in each of the drawings will be described next. First, each of Figs. 3C and 3E shows a state where the retraction mechanism 100 is operated to depress the piston 120 to a lowermost position. Meanwhile, each of Figs. 3D and 3F shows a state where the operation of the retraction mechanism 100 is stopped (pressurized air is exhausted) and retracting motion is made by which the piston 120 is lifted (pulled back) upward by the expansion (restoring force) of the coil spring 122 as an elastic member.

In any of the drawings, deformation of the Y-packing 150 is illustrated in an exaggerated fashion in order to facilitating understanding of the motion.

In the state in Fig. 3C, the retraction mechanism 100 is actuated to put the space 108 in a high pressure. The lip part 162 of the Y-packing 150 on the inner peripheral side is stretched out with pressurized air to be pressed against the outer peripheral surface 116b of the piston head 116. In doing this, a surface 116c receiving the press is brought into a circumferential shape. Likewise, the lip part 162 of the Y-packing 150 on the outer peripheral side is also pressed against the inner peripheral surface of the cylinder 110. This suppresses compressed air from leaking in a direction of pushing out the piston 120 (toward a lower side).

On the other hand, in the state in Fig. 3E, the retraction mechanism 100 (pneumatic cylinder) is actuated to put the space 108 in a high pressure. The lip part 162 of the Y-packing 150 on the outer peripheral side is stretched out with pressurized air to be pressed against the inner peripheral surface 110d of the cylinder 110. In doing this, a surface 110c receiving the press is brought into a circumferential shape. Likewise, the lip part 162 of the Y-packing 150 on the inner peripheral side is also pressed against the inner peripheral surface of the piston head. This suppresses compressed air from leaking in a direction of pushing out the piston 120 (toward a lower side), like in the case of Fig. 3C.

In the state shown in each of Figs. 3C and 3E, pressurization of the space 108 using the retraction mechanism 100 (pneumatic cylinder) is stopped, the pressurized air is exhausted from the space 108, and a pressure in the space 108 is reduced to a substantially atmospheric pressure. This results in loss of an air pressure with which the coil spring 122 wound around the piston rod 118 has been biased. Thus, the coil spring 122 expands by its restoring force to pull back the piston 120 upward.

By doing so, Fig. 3C changes to the state in Fig. 3D and Fig. 3E changes to the state in Fig. 3F.

In Fig. 3D, in response to the upward movement of the piston head 116, the lip part 162 on the inner peripheral side in contact with the piston head 116 is deformed in such a manner as to be drawn out upward.

By contrast, in Fig. 3F, in response to the upward movement of the piston head 116, the lip part 162 on the outer peripheral side in contact with the cylinder 110 is bent downward to be deformed in such a manner as to be curled up.

While the Y-packing 150 is arranged with the pressure-receiving surface thereof pointed toward a high-pressure side in either case, a way in which the Y-packing 150 is deformed differs between a case where the Y-packing 150 is arranged on the side of the cylinder 110 (fixed side) and a case where the Y-packing 150 is arranged on the side of the piston 120 (moving side).

These will be compared. While the deformation shown in Fig. 3D is deformation along the movement of the piston head 116, the deformation shown in Fig. 3F is deformation against the movement of the cylinder 110. Thus, frictional force µF tends to become larger in the latter case. This becomes more noticeable if the Y-packing 150 becomes affixed to a part (piston head 116 or cylinder 110) in contact with the Y-packing 150 in response to an extension of a period of supplying (a period of retaining) compressed air, for example.

As described above, the retraction mechanism of the present embodiment is configured in such a manner that the Y-packing 150 is arranged on the side of the cylinder 110 (fixed side), and at the time of introduction of pressurized air, the lip part 162 is pressed against the outer peripheral part of the piston 120 (moving side) so as to suppress leakage of the pressurized air in a direction of sliding motion of the piston 120 (downward direction).

In other words, the Y-packing 150 is arranged at the cylinder 110 in such a manner that a movement direction of the piston 120 at the time of pressurization (downward direction) and a direction of the pressure-receiving surface of the Y-packing 150 (upward direction) are opposite to each other.

Thus, at the time of depressurization, the movement direction of the piston 120 (upward direction) and the direction of the pressure-receiving surface of the Y-packing 150 (upward direction) agree with each other. Furthermore, if the Y-packing 150 is arranged on the side of the cylinder 110, the deformation of the lip part 162 at the time of retraction voluntarily conforms to movement of the piston head 116 (moving side).

On the other hand, if the Y-packing 150 is arranged on the moving side (piston head 116) in this state, the deformation of the lip part 162 voluntarily resists the movement of the piston head 116.

In particular, if the restoring force of the elastic member is used in making the retracting motion, namely, in making pulling back motion like in this example, this force should unavoidably be designed to be low in some cases compared to a case of using an air pressure for pushing out. In the retraction mechanism of the present embodiment, however, even if force for pulling back is low, it is still possible to facilitate further improvement of measurement accuracy of the measuring device and facilitate further shortening of time required for the pulling back as a result of the characteristic of allowing the frictional force µF to be reduced easily. As a result, it is possible to shorten measurement time further.

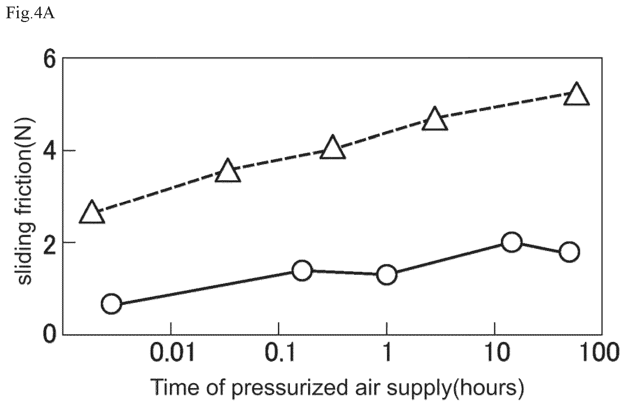

The effects of the present embodiment have been confirmed experimentally and result thereof will be described next. Fig. 4A is a view showing comparison in sliding resistance between the retraction mechanism 100 of the present embodiment and the retraction mechanism having the conventional configuration. A horizontal axis shows time of pressure supply. (The drawing has an indication "Time of pressurized air supply (hours). The unit is hour(s).) A vertical axis shows a sliding resistance. (The drawing has an indication "sliding friction (N). The unit is N.)

In Fig. 4A, circular markers show experimental result about the retraction mechanism 100 of the present embodiment. Meanwhile, triangular markers show experimental result about the retraction mechanism having the conventional configuration (comparative example).

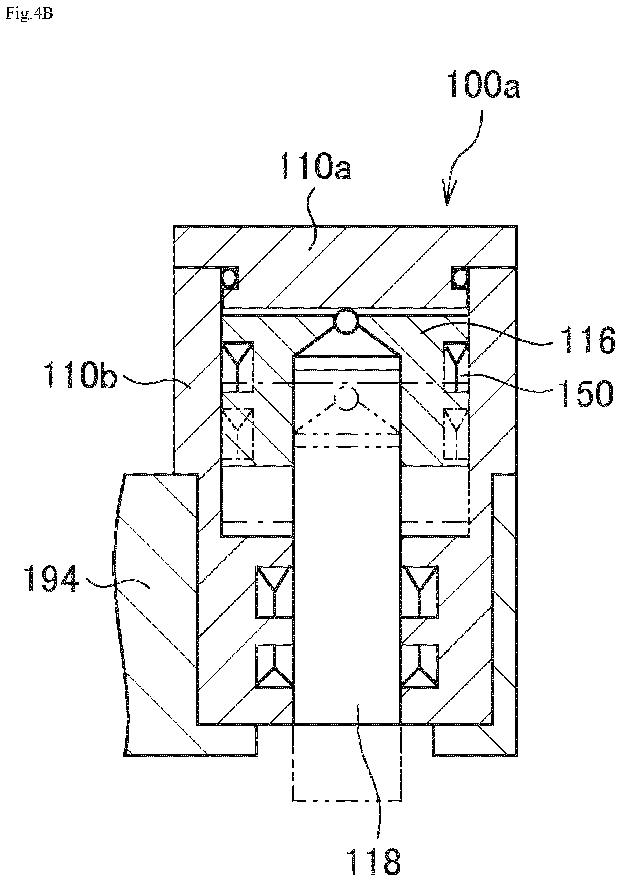

Fig. 4B is a schematic sectional view of a retraction mechanism 100a having the conventional configuration used in the experiment. In Fig. 4B, a cylinder is composed of an upper cylinder 110a and a side part cylinder 110b. However, there is substantially no difference in the internal shape of the cylinder 110. Alternate long and short dashed lines show a state where the piston 120 has moved down to a lowermost position.

The experimental result in Fig. 4A was obtained by the following procedures.

(Procedure 1) First, the coil spring 122 was removed from each of the retraction mechanisms 100 and 100a as pneumatic cylinders. The illustration of the coil spring is omitted from Fig. 4B.

(Procedure 2) Next, pressurized air was introduced into the space 108 between the cylinder 110 and the piston head 116 in each of the retraction mechanisms 100 and 100a. Each of the retraction mechanisms 100 and 100a was left unattended or kept in this pressurized state for a predetermined period of time. This corresponds to the "time of pressure supply (Hr)."

(Procedure 3) The pressurization of the space 108 was stopped and the pressurized air was exhausted until the space 108 was put in a substantially atmospheric pressure.

(Procedure 4) A starting resistance of the piston 120 was measured using a load meter and defined as "sliding resistance."

The following matters have been found out from the experimental result in Fig. 4A.

(Viewpoint 1) Regardless of the time of pressure supply, the starting resistance was lower in the retraction mechanism according to the present embodiment including the Y-packing arranged on the inner wall of the cylinder.

This viewpoint suggests that force required for the retracting motion is smaller in the retraction mechanism of the present embodiment than in the conventional type. It has made it clear that, according to the measuring device including the retraction mechanism of the present embodiment, measurement time is shortened further and measurement accuracy is improved further even if the restoring force of the elastic member is used in pulling back the piston.

(Viewpoint 2) Regardless of the time of pressure supply, a ratio between the starting resistances is equal to or greater than two, and a difference therebetween is about 2N at minimum.

These show that the retraction mechanism according to the present embodiment has effectiveness more significant than expected.

(Viewpoint 3) A difference between sliding resistances tended to increase as the time of pressure supply became longer.

In the retraction mechanism of the present embodiment, increase in the time of pressure supply did not cause much increase in a sliding resistance. On the other hand, in the retraction mechanism of the conventional type, increase in the time of pressure supply was found to cause large increase in a sliding resistance.

This shows that the effect of the present embodiment becomes more significant in a case where the Y-packing 150 is affixed to a counterpart material as a result of the long time of pressure supply.

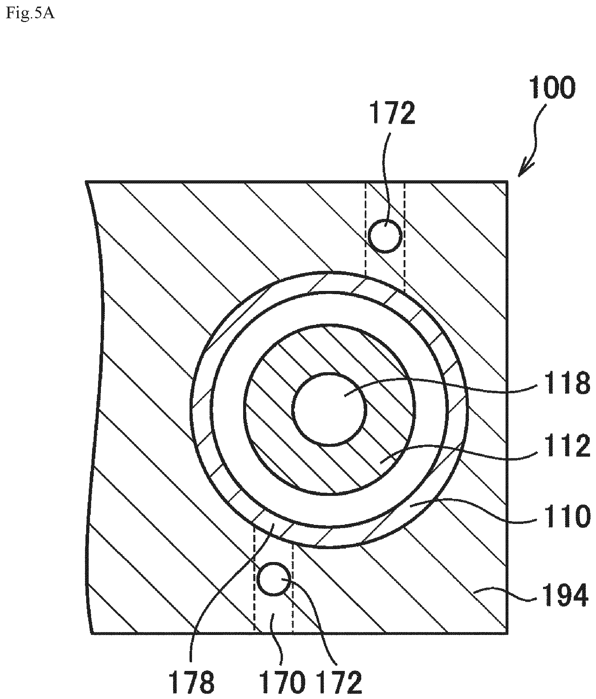

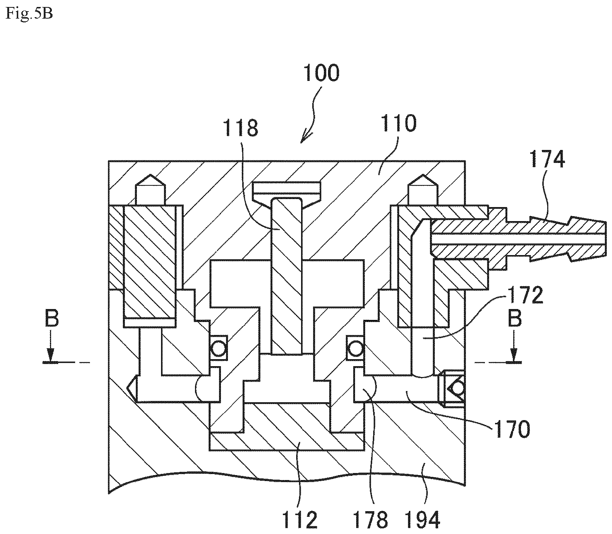

Described next are an exhaust system and others for putting the space 108 in an atmospheric pressure using Figs. 5A and 5B. Fig. 5A is a transverse sectional view of the retraction mechanism 100 as a pneumatic cylinder and is a sectional view taken along a line B-B in Fig. 5B. Fig. 5B is a sectional view taken along a line A-A in Fig. 3 and is a sectional view taken at a position displaced from a center line of the piston rod 118.

An upper surface of the cylinder base 112 on an outer diameter side thereof and facing a bottom surface of the piston head 116 is provided with a cutout 178 formed at a position displaced from the center of the upper surface and extending in a width direction of the retraction mechanism 100.

An air recess 170 extending to an end surface of a case member 194 in the width direction communicably contacts the cutout 178, and a communication path 172 extending in the upward-downward direction is connected to the vicinity of an end of the air recess 170. A channel extending externally from the retraction mechanism 100 is formed at an upper part of the communication path 172, and a joint 174 such as a hose connector is attached to the channel.

By configuring the exhaust system in this way, it become possible to house the device even into the small-size case member 194.

### EXPLANATION OF REFERENCE SIGNS

10 ... Compressed air source, 20 ... Control processor, 60 ... Measuring device, 100 ... Retraction mechanism, 106, 108 ... Space, 109 ... Circumferential recess, 110 ... Cylinder, 110a ... Upper cylinder, 110b ... Side part cylinder, 110c ... (Contact) surface, 110d ... Inner peripheral surface, 111 ... Circumferential recess, 112 ... Cylinder base, 116 ... Piston head, 116a ... (Piston) side wall, 116b ... (Piston) outer wall surface, 118 ... Piston rod, 120 ... Piston, 122 ... Coil spring, 132 ... Lever shaft, 132a ... Counter-probe side, 132b ... (Lateral) end, 134 ... Latching tool, 136 ... Abutment part, 140 ... Swing shaft, 142 ... Holding mount, 146 ... Tension spring, 148 ... Support shaft, 150 ... Y-packing, 160 ... Base part, 162 ... Lip part, 164 ... Recess, 170 ... Air recess, 172 ... Communication path, 178 ... Cutout, 180 ... Differential transformer, 182 ... Displacement shaft, 184 ... Coil, 186 ... Terminal processor, 190 ... Case member, 194 ... Case member, 220 ... Bellows, 222, 224 ... Latch, 232 ... Coupler, 234 ... Arm, 236 ... Probe holder, 238 ... Retaining screw, 240 ... Contact part, 300 ... Probe, W ... Workpiece

## Claims

1. A pneumatic cylinder type retraction mechanism comprising a cylinder and a piston movable back and forth inside the cylinder, the retraction mechanism causing the piston to move back and forth using an air pressure, wherein
sealing means is provided as stationary sealing means on an inner periphery of the cylinder facing an outer periphery of the piston, the sealing means suppressing leakage of pressurized air for actuating the piston from within the cylinder.

2. The retraction mechanism according to claim 1, wherein
the sealing means is a lip packing,
the lip packing includes a lip part made of an elastic material, and
when the pressurized air is introduced into the cylinder for pushing out the piston, the lip part is pressed against an outer peripheral surface of the piston so as to suppress leakage of the pressurized air in a direction of sliding motion of the piston.

3. The retraction mechanism according to claim 2, wherein
the piston includes a piston head slidable along an inner wall of the cylinder, and a piston rod extending downward from a center part of the piston head in a direction in which the piston moves back and forth, and
the piston head is in sliding contact with the lip part.

4. The retraction mechanism according to claim 3, further comprising:
an elastic member, wherein
the piston is pulled back using the restoring force of the elastic member.

5. The retraction mechanism according to claim 4, wherein
the elastic member is a coil spring,
the piston head has a space defined between a side wall thereof facing the cylinder inner wall across a gap and the piston rod, and
the coil spring wound around the piston rod is held in the space.

6. The retraction mechanism according to claim 5, wherein
the lip packing is a Y-packing or a U-packing.

7. The retraction mechanism according to claim 3, wherein
a cylinder base is provided at a lower part of the piston head, and
an exhaust channel is provided, the exhaust channel including a cutout provided at an upper surface of the cylinder base and extending in a transverse direction, and a communication path provided at a case member housing the retraction mechanism and communicably contacting the cutout.

8. A dimension measuring device comprising:
a probe to come into abutting contact with a workpiece;
an arm coupled to the probe on one end side and connected to a measuring head including a differential transformer on the other end side;
a holding mount holding the arm in a manner allowing the arm to swing; and
swinging means that causes the arm to swing, wherein
the swinging means includes a tension spring and the retraction mechanism according to any one of claims 1 to 7.
